# EUROPÄISCHE PATENTSCHRIFT

(11) **EP 1 247 678 B1**
(45) Veröffentlichungstag und Bekanntmachung des Hinweises auf die Patenterteilung: **10.10.2007**
(21) Anmeldenummer: 02005208.0
(22) Anmeldetag: 07.03.2002
(51) Int. Cl.: B60K 5/12

(54) **Pendelstütze für ein Aggregat in einem Kraftfahrzeug**
Pendulum support for a motor vehicle sub-unit
Support pendulaire pour un agrégat dans un véhicule automobile

(30) Priorität: 07.04.2001 DE 10117587
(43) Veröffentlichungstag der Anmeldung: 09.10.2002
(73) Patentinhaber: Volkswagen Aktiengesellschaft, 38436 Wolfsburg (DE)
(72) Erfinder: Schulze, Carsten, 38444 Wolfsburg (DE); Schmidt, Rainer, 38159 Vechelde (DE)

(56) Entgegenhaltungen:
- EP-A- 0 409 579
- EP-A- 0 647 787
- US-A- 2 088 798
- PATENT ABSTRACTS OF JAPAN Bd. 2000, Nr. 10, 17. November 2000 (2000-11-17) -& JP 2000 193003 A (TOKAI RUBBER IND LTD), 14. Juli 2000 (2000-07-14)

## Beschreibung

Die vorliegende Erfindung betrifft eine Pendelstütze für ein Aggregat in einem Kraftfahrzeug gemäß der im Anspruch 1 angegebenen Merkmalskombination.

Zur Lagerung der Einheit aus Motor und Getriebe in einem Kraftfahrzeug sind üblicherweise mehrere Lager vorgesehen, die über ihre Feder/Dämpfungseigenschaften dafür sorgen sollen, daß die beim Lauf des Motors auftretenden Schwingungen nicht oder nur gedämpft auf die Karosserie des Kraftfahrzeugs übertragen werden.

Insbesondere bei einem quer eingebauten Motor wird auch häufig eine gattungsgemäße Pendelstütze dazu eingesetzt, die Übertragung von Schwingungen zu verringern. Andernfalls würden diese Schwingungen für die Fahrzeuginsassen des Kraftfahrzeugs deutlicher wahrzunehmen sein.

Eine solche Pendelstütze weist üblicherweise einen Stützarm auf, der über ein erstes Lager zur aggregateseitigen Anbindung des Stützarms verfügt sowie über ein zweites Lager, mit dem der Stützarm gegen die Karosserie oder einen Hilfsrahmen abgestützt werden kann. Die Lager dieses Stützarms weisen dabei üblicherweise einen Lagerkern sowie einen Lageraußenring auf, wobei sich der Lagerkern über ein Elastomerbauteil oder dergleichen zur Schwingungsdämpfung gegen den Lageraußenring abstützt (EP-A-0 647 787).

Bei einer solchen bekannten Pendelstütze überträgt der Stützarm eine Zug- oder Druckkraft auf den Lageraußenring und über das Elastomerbauteil auf den Lagerkern, wobei der Lageraußenring und der Lagerkern als Buchse oder Hülse ausgebildet sein können und der Lagerkern überträgt dann die Kraft in die Karosserie oder den Hilfsrahmen.

Bei dieser Ausführungsform der Pendelstütze ist der Lageraußenring ähnlich dem großen Pleuelauge einer Pleuelstange ausgebildet, da das Elastomerbauteil und der Lagerkern in den Lageraußenring aufgenommen werden müssen. Dies führt zu einer großen Massenkonzentration der Pendelstütze im Bereich des karosserieseitigen Lagers. Auf Grund der somit großen Masse weist die Pendelstütze eine tiefe Eigenfrequenz auf und benötigt auf Grund des großen Durchmessers des Lageraußenrings und der dynamischen Freigänge einen großen Bauraum in der Aufnahme der Karosserie.

Auch aus der EP-A-0 647 787 ist eine Pendelstütze für ein Aggregat in einem Kraftfahrzeug mit einem Stützarm und einem ersten Lager zur aggregateseitigen Anbindung des Stützarms sowie einem zweiten Lager zur karosserie- oder rahmenseitigen Anbindung des Stützarms bekannt, wobei zwischen dem Lagerkern und einem Lageraußenring des zweiten Lagers ein Schwingungsdämpfungsbauteil vorgesehen ist.

Bei einer weiteren bekannten Pendelstütze ist der Stützarm gegabelt ausgebildet und überträgt seine Kraft auf einen einteiligen Lagerkern, der im Gabelzwischenraum angeordnet ist und dann diese Kraft über das Elastomerbauteil an den Lageraußenring weitergibt, der mit der Karosserie oder einen Hilfsrahmen verbunden ist. Auf Grund der gabelförmigen Ausbildung des Stützarms ist seine Herstellung ausgesprochen teuer und aufwendig.

Auch benötigt das gabelförmig ausgebildete Ende des Stützarms einen großen Bauraum und weist wiederum eine große Masse auf und im Bereich des Übergangs des Stützarms vom geradlinigen Bereich in den gabelförmigen Bereich stellen sich Probleme hinsichtlich der Festigkeit ein.

Der vorliegenden Erfindung liegt nunmehr die Aufgabe zugrunde, eine einfach aufgebaute und am Kraftfahrzeug einfach zu montierende Pendelstütze zu schaffen, die einen geringeren Bauraumbedarf aufweist und kleinere bewegte Massen besitzt.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Nach der Erfindung ist eine Pendelstütze vorgesehen für ein Aggregat in einem Kraftfahrzeug mit einem Stützarm und einem ersten Lager zur aggregateseitigen Anbindung des Stützarms sowie einem zweiten Lager zur karosserie- oder rahmenseitigen Anbindung des Stützarms, wobei das zweite Lager als geteiltes Lager mit zwei Lagerkernen und mindestens einem Lageraußenring ausgebildet und zwischen jedem Lagerkern des zweiten Lagers und dem Lageraußenring je ein sich gegen den Lagerring abstützendes Schwingungsdämpfungsbaüteil vorgesehen ist, und wobei der Stützarm zwischen den beiden Lagerkernen aufgenommen ist.

Durch die Ausbildung des zweiten Lagers als geteiltes Lager derart, daß zumindest der Lagerkern geteilt ausgebildet ist mit zwei Lagerkernen, wird erreicht, daß der Stützarm zwischen den beiden Lagerkernen aufgenommen wird, die sich über je ein Schwingungsdämpfungsbauteil in der Form eines Elastomerbauteils gegen den Lageraußenring abstützen und die Kraft vom Stützarm mittig in radialer Richtung auf die Lagerkerne und Elastomerbauteile auf den Lageraußenring übertragen wird und der Stützarm eine stangenförmige geradlinige Konfiguration aufweist.

Dies führt dazu, daß der Stützarm eine weitgehend gleich bleibende Masseverteilung aufweist und mit kostengünstigen und einfachen Werkzeugen hergestellt werden kann.

Nach einer vorteilhaften Ausführungsform ist auch der Lageraußenring des zweiten Lagers geteilt ausgebildet. Dies führt zu einer kostengünstigen Austauschmöglichkeit am Fahrzeug, da im Verschleißfall einzelne Außenringe ausgetauscht werden können.

Nach einer Modifikation ist es möglich, den Lageraußenring des zweiten Lagers einteilig auszubilden und einen Durchbruch für den Stützarm vorzusehen, so daß der Lageraußenring zwei mit jeweils einem Lagerkern über beispielsweise Vulkanisation verbundene Elastomerbauteile besitzt und der geradlinig ausgebildete Stützarm in den Bereich zwischen die Lagerkerne geführt wird und mit diesen über einen Schraubbolzen zur Krafteinleitung verbunden wird.

Damit wird die Kraft vom Stützarm mittig in das Lager eingeleitet und wirkt im Lager radial von innen nach außen.

Die Erfindung wird im Folgenden anhand der Zeichnung näher erläutert. Diese zeigt in:
Fig. 1 eine teilweise geschnittene Darstellung einer Pendelstütze nach einer ersten Ausführungsform;
Fig.2 eine Teilschnittansicht einer Pendelstütze nach einer zweiten Ausführungsform; und
Fig.3 eine Teilschnittansicht einer Pendelstütze nach einer dritten Ausführungsform.

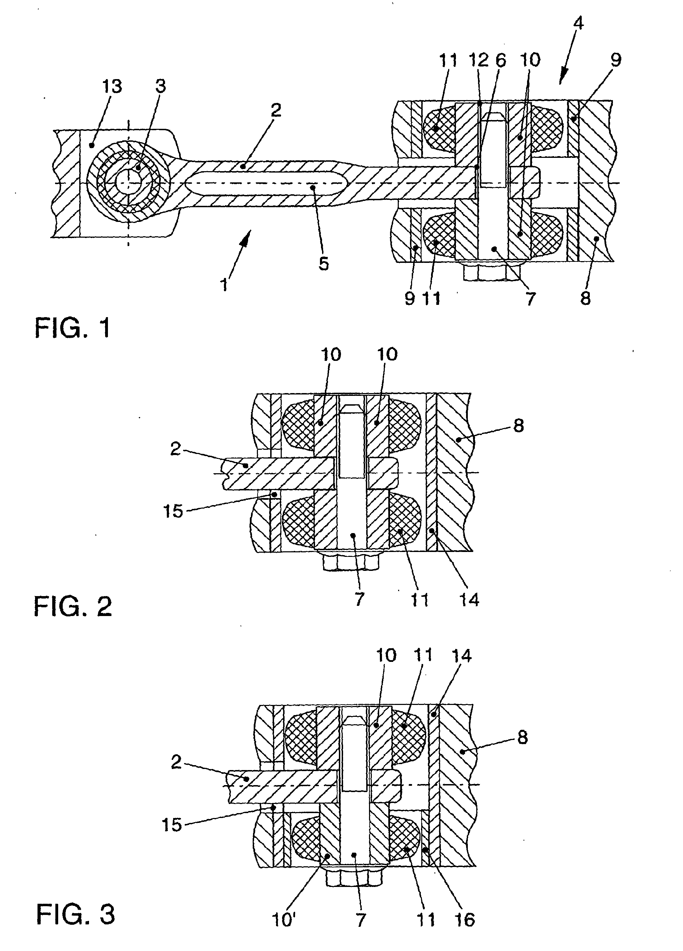

Wie es ohne weiteres anhand von Fig. 1 der Zeichnung ersichtlich ist, weist die Pendelstütze 1 nach der vorliegenden Erfindung im wesentlichen einen Stützarm 2, ein erstes Lager 3 und ein zweites Lager 4 auf.

Der Stützarm 2 weist eine weitgehend geradlinige stangenförmige Ausbildung und besitzt bei der dargestellten Ausführungsform zur Gewichtsersparnis eine Ausnehmung 5. Der Stützarm 2 kann beispielsweise als gegossenes Bauteil aus einer Aluminium Legierung oder als Stahlschweißkonstruktion hergestellt werden.

Das Lager 4 wird dabei in einer nur schematisch dargestellten Aufnahme 8 angeordnet. Die Anordnung der erfindungsgemäßen Pendelstütze 1 zwischen dem nicht näher dargestellten Aggregat in der Form beispielsweise des Verbrennungsmotors des Kraftfahrzeugs und der Karosserie oder einen Hilfsrahmen kann dabei so gewählt werden, daß das Lager 3 zur motorseitigen Anbindung verwendet wird und das Lager 4 zur karosserieseitigen Anbindung oder auch umgekehrt.

Bei der Ausführungsform nach Fig. 1 der Zeichnung weist das Lager 4 einen zweigeteilten Lageraußenring in der Form der Lageraußenringe 9 auf, die in der Aufnahme 8 angeordnet sind. Zwei Lagerkerne 10 stützen sich über jeweils ein Elastomerbauteil 11 zur Schwingungsdämpfung und -isolation gegen die Lageraußenringe 9 ab.

Bei der Montage der Pendelstütze 1 können vorgefertigte Einheiten aus Lageraußenring 9, Elastomerbauteil 11 und Lagerkern 10 in die Aufnahme 8 eingesetzt werden und dann der Stützarm 2 in den Zwischenraum zwischen die beiden Lagerkerne 10 eingeführt werden. Einer der beiden Lagerkerne kann eine Innengewinde 12 besitzen, mit dem der Schraubbolzen 7 verschraubt wird, nachdem er durch die Bohrung 6 des Stützarms 2 hindurch gesteckt wurde.

Im Betrieb wird dann z.B. über den mit einer Halterung 13 verbundenen Verbrennungsmotor eine Schwingung in das Lager 3 eingeleitet, die im Stützarm 2 zu einer Zug- oder Druckkraft führt, die von diesem über den Schraubbolzen 7 mittig in das Lager 4 eingeleitet wird und zwar über die Lagerkerne 10, die die Schwingungsbewegung über die Elastomerbauteile 11 gedämpft in die Lageraußenringe 9 einleiten, von wo aus die Kraft über die Aufnahme 8 abgestützt wird.

Fig. 2 der Zeichnung zeigt einen Ausschnitt einer zweiten Ausführungsform einer Pendelstütze nach der Erfindung. Diese unterscheidet sich von der in Fig. 1 der Zeichnung dargestellten ersten Ausführungsform dadurch, daß der Lageraußenring 14 nach der zweiten Ausführungsform einteilig ausgebildet ist und einen Durchbruch 15 für den Stützarm 2 besitzt. Bei dieser Ausführungsform können die beiden Lagerkerne 10 über einen Vulkanisationsvorgang mit den Elastomerbauteilen 11 und diese mit dem Lageraußenring 14 verbunden werden.

Schließlich zeigt Fig. 3 der Zeichnung einen Ausschnitt einer weiteren Ausführungsform einer Pendelstütze nach der Erfindung.

Diese Ausführungsform entspricht weitgehend der zweiten Ausführungsform nach Fig. 2 der Zeichnung, wobei bei der dritten Ausführungsform über einen Vulkanisationsvorgang der Lagerkern 10 mit dem Elastomerbauteil 11 und dem einteiligen Lageraußenring 14 verbunden werden kann, der in der Aufnahme 8 befestigt werden kann.

Der in Fig. 3 der Zeichnung in der unteren Hälfte dargestellte zweite Lagerkern 10' kann über einen Vulkanisationsvorgang mit dem Elastomerbauteil 11 verbunden werden und dieses wiederum mit einer Hülse 16, die in den einteiligen Lageraußenring 14 eingepreßt werden kann.

Die Erfindung zeichnet sich dadurch aus, daß durch die direkte Krafteinleitung in die Lagerkerne des Lagers 4 das Gewicht der bewegten Bauteile, insbesondere des Stützarms 2, gering gehalten werden kann. Darüber hinaus kann der Stützarm 2 aufgrund seiner einfachen Geometrie kostengünstiger gestellt werden. Der Bauraumbedarf der erfindungsgemäßen Pendelstütze ist verglichen mit der bekannten Pendelstütze deutlich geringer, da die Kraft über den Stützarm 2 von innen in das Lager 4 eingeleitet wird und nicht von außen her. Der Lageraußenring beschränkt daher mit seiner Geometrie den benötigten Bauraum und es sind keine dynamischen Freigänge mehr erforderlich, wie dies bei der bekannten einer Pleuelstange ähnlichen oder gabelförmigen Pendelstütze notwendig ist.

### BEZUGSZEICHENLISTE

- 1: Pendelstütze
- 2: Stützarm
- 3: Lager
- 4: Lager
- 5: Ausnehmung
- 6: Bohrung
- 7: Schraubbolzen
- 8: Aufnahme
- 9: Lageraußenring
- 10: Lagerkerne
- 11: Elastomerbauteils
- 12: Innengewinde
- 13: Halterung
- 14: Lageraußenring
- 15: Durchbruch
- 16: Hülse

## Patentansprüche

1. Pendelstütze für ein Aggregat in einem Kraftfahrzeug mit einem Stützarm (2) und einem ersten Lager (3) zur aggregateseitigen Anbindung des Stützarms (2) sowie einem zweiten Lager (4) zur karosserie- oder rahmenseitigen Anbindung des Stützarms (2), wobei das zweite Lager (4) als geteiltes Lager (4) mit zwei Lagerkernen (10) und mindestens einem Lageraußenring (9, 14) ausgebildet und zwischen jedem Lagerkern (10) des zweiten Lagers (4) und dem Lageraußenring (9, 14) je ein sich gegen den Lageraußenring (9, 14) abstützendes Schwingungsdämpfungsbauteil (11) vorgesehen ist, und wobei der Stützarm (2) zwischen den beiden Lagerkernen (10) aufgenommen ist.

2. Pendelstütze nach Anspruch 1, **dadurch gekennzeichnet, dass** sich der Stützarm (2) am zweiten Lager (4) über die Lagerkerne (10) und das Schwingungsdämpfungsbauteil (11) gegen den Lageraußenring (9) abstützt.

3. Pendelstütze nach Anspruch 1 oder 2, **dadurch gekennzeichnet, dass** der Lageraußenring (9) des zweiten Lagers (4) geteilt ausgebildet ist.

4. Pendelstütze nach Anspruch 1 oder 2, **dadurch gekennzeichnet, dass** der Lageraußenring (14) des zweiten Lagers (4) einteilig ausgebildet ist und einen Durchbruch (15) für den Stützarm (2) aufweist.

5. Pendelstütze nach Anspruch 4, **dadurch gekennzeichnet, dass** in den Lageraußenring (14) eine Hülse (16) eingepresst ist, über die sich ein Lagerkern (10) über das Schwingungsdämpfungsbauteil (11) abstützt.

6. Pendelstütze nach einem der Ansprüche 1 bis 5, **dadurch gekennzeichnet, dass** der Ort der Krafteinleitung in das zweite Lager (4) weitgehend in der Mitte der Achsiallängsrichtung des zweiten Lagers (4) liegt.

7. Pendelstütze nach einem der Ansprüche 1 bis 6, **dadurch gekennzeichnet, dass** der Stützarm (2) Kräfte in das zweite Lager (4) als radial wirkende Kräfte einleitet.

## Claims

1. Pendulum support for a motor vehicle sub-unit, with a supporting arm (2) and a first bearing (3) for connection of the supporting arm (2) on the sub-unit side, and with a second bearing (4) for connection of the supporting arm_ (2) on the body or frame side, wherein the second bearing (4) is designed as a divided bearing (4) with two bearing cores (10) and at least one bearing outer race (9, 14), and a vibration damping component (11) is provided between each bearing core (10) of the second bearing (4) and the bearing outer race (9, 14) and is supported against the bearing outer race (9, 14), and wherein the supporting arm (2) is accommodated between the two bearing cores (10).

2. Pendulum support according to Claim 1, **characterized in that** the supporting arm (2) on the second bearing (4) is supported against the bearing outer race (9) via the bearing cores (10) and the vibration damping component (11).

3. Pendulum support according to Claim 1 or 2, **characterized in that** the bearing outer race (9) of the second bearing (4) is of divided design.

4. Pendulum support according to Claim 1 or 2, **characterized in that** the bearing outer race (14) of the second bearing (4) is of single-part design and has an opening (15) for the supporting arm (2).

5. Pendulum support according to Claim 4, **characterized in that** a sleeve (16), via which a bearing core (10) is supported via the vibration damping component (11), is pressed into the bearing outer race (14).

6. Pendulum support according to one of Claims 1 to 5, **characterized in that** the location at which force is introduced into the second bearing (4) lies largely in the centre of the axial longitudinal direction of the second bearing (4).

7. Pendulum support according to one of Claims 1 to 6, **characterized in that** the supporting arm (2) introduces forces into the second bearing (4) in the form of radially acting forces.

## Revendications

1. Support pendulaire pour un groupe dans un véhicule automobile comprenant un bras support (2) et un premier palier (3) pour la liaison du bras support (2) du côté du groupe ainsi qu'un deuxième palier (4) pour la liaison du côté de la carrosserie ou du cadre du bras support (2), le deuxième palier (4) étant réalisé sous la forme d'un palier (4) divisé avec deux coeurs de palier (10) et au moins une bague extérieure de palier (9, 14) et un composant amortisseur de vibrations (11) qui s'appuie à chaque fois contre la bague extérieure de palier (9, 14) étant prévu entre chaque coeur de palier (10) du deuxième palier (4) et la bague extérieure de palier (9, 14), et le bras support (2) étant logé entre les deux coeurs de palier (10).

2. Support pendulaire selon la revendication 1, **caractérisé en ce que** le bras support (2) s'appuie sur le deuxième palier (4) pare le biais du coeur de palier (10) et le composant amortisseur de vibrations (11) s'appuie contre la bague extérieure de palier (9).

3. Support pendulaire selon la revendication 1 ou 2, **caractérisé en ce que** la bague extérieure de palier (9) du deuxième palier (4) est divisée.

4. Support pendulaire selon la revendication 1 ou 2, **caractérisé en ce que** la bague extérieure de palier (14) du deuxième palier (4) est réalisée d'une seule pièce et présente une traversée (15) pour le bras support (2).

5. Support pendulaire selon la revendication 4, **caractérisé en ce qu'**une douille (16) par le biais de laquelle un coeur de palier (10) s'appuie par le biais du composant amortisseur de vibrations (11) est enfoncée dans la bague extérieure de palier (14).

6. Support pendulaire selon l'une des revendications 1 à 5, **caractérisé en ce que** le lieu d'induction des forces dans le deuxième palier (4) se trouve quasiment au centre du sens longitudinal axial du deuxième palier (4).

7. Support pendulaire selon l'une des revendications 1 à 6, **caractérisé en ce que** le bras support (2) induit les forces dans le deuxième palier (4) sous la forme de forces à action radiale.
